(19) Europäisches Patentamt

European Patent Office

Office européen des brevets

(11) Numéro de publication: **0 376 866 B1**

(12) **FASCICULE DE BREVET EUROPEEN**

(45) Date de publication de fascicule du brevet: **23.03.94** (51) Int. Cl.⁵: **H04M 9/08**

(21) Numéro de dépôt: **89420516.0**

(22) Date de dépôt: **26.12.89**

(54) **Dispositif de commande pour poste téléphonique "mains libres" fonctionnant en alternat.**

(30) Priorité: **28.12.88 FR 8817578**

(43) Date de publication de la demande:
**04.07.90 Bulletin 90/27**

(45) Mention de la délivrance du brevet:
**23.03.94 Bulletin 94/12**

(84) Etats contractants désignés:
**DE FR GB IT NL SE**

(56) Documents cités:
**EP-A- 0 271 386**
**US-A- 4 741 018**

**PATENT ABSTRACTS OF JAPAN, vol. 9, no.
106 (E-313)[1829], 10 mai 1985 & JP-A-59 230
356**

(73) Titulaire: **SGS-THOMSON MICROELECTRO-
NICS S.A.**
**7, Avenue Galliéni**
**F-94250 Gentilly(FR)**

(72) Inventeur: **Arnaud, Thierry**
**38, Chemin de la Taillat**
**F-38240 Meylan(FR)**

(74) Mandataire: **de Beaumont, Michel**
**1bis, rue Champollion**
**F-38000 Grenoble (FR)**

## Description

La présente invention concerne de manière générale un dispositif de commande d'un appareil téléphonique "mains libres". Cet appareil comprend une voie émission reliée à une extrémité à un microphone et à l'autre extrémité à une interface de liaison avec une ligne téléphonique et une voie réception reliée à une extrémité à l'interface de liaison et à l'autre extrémité à un haut-parleur.

Un tel appareil comporte une boucle d'amplification constituée d'une part par les deux voies émission et réception et d'autre part par le couplage acoustique haut-parleur/microphone et par le couplage électrique dû à l'interface de liaison qui relie les voies émission et réception de chaque appareil à la ligne téléphonique. Si le gain de cette boucle d'amplification est supérieur à l'unité, il se produit une instabilité, dite effet Larsen, qui se traduit par un sifflement désagréable.

Pour éviter cet effet parasite, il est usuel de monter un atténuateur dans chacune des voies émission et réception.

Un exemple d'un tel système, tel que décrit par exemple dans FR-A-2 618 626, est représenté de façon très schématique en figure 1. La voie émission comprend un microphone M, un compresseur d'émission GE, destiné à fournir en sortie un signal comprimé de sorte que sa valeur crête soit constante, par exemple de l'ordre de 100 millivolts, et un atténuateur d'émission ATE dont la sortie est reliée à la ligne téléphonique L par l'intermédiaire d'une interface de liaison IL du type 2 fils/4 fils.

La voie réception comprend de façon similaire un compresseur de réception GR et un atténuateur de réception ATR dont la sortie est fournie à un haut-parleur HP. Pour éviter la mise en oscillation de la boucle comprenant la voie réception, le couplage électrique AL au niveau de la ligne et de l'interface ligne, et le couplage acoustique AC entre le haut-parleur et le microphone, chacun des atténuateurs ATE et ATR est mis à une atténuation minimale quand la voie dans laquelle il est placé est active et à une atténuation maximale quand c'est l'autre voie qui est active. On dit que le système fonctionne en "alternat" c'est-à-dire que la personne qui a pris la parole ne peut être interrompue par la personne située à l'autre bout de la ligne téléphonique. Autrement dit, il n'est pas possible que ces deux personnes puissent parler simultanément étant donné qu'une seule des deux voies de chaque appareil est active, la voie émission de la personne qui parle et la voie réception de la personne qui écoute.

Le dispositif décrit dans FR-A-2 618 626 susmentionnée, prévoit de commander de façon alternée les atténuateurs ATE et ATR en s'affranchissant du bruit présent au niveau du microphone en émission ou de la ligne en réception. En effet, si l'on comparait directement le signal de sortie des compresseurs GE et GR, pour déterminer l'actionnement des atténuateurs ATE et ATR, il serait possible qu'un fort bruit de fond dans une des voies (par exemple lorsqu'un des deux correspondants parle dans une pièce très bruitée) provoque un signal d'amplitude suffisamment forte en sortie du compresseur pour faire basculer l'atténuateur de cette voie en position active (atténuation maximale). Dans un tel cas, il y aurait toujours une atténuation maximum sur la voie non bruitée et l'autre personne ne pourrait jamais prendre la parole.

Pour éviter cet inconvénient, le dispositif de l'art antérieur prévoit de détecter la valeur de crête du signal redressé à la sortie de chacun des compresseurs GE et GR par des détecteurs de crête DE et DR. A la sortie de chacun de ces détecteurs de crête, sont prévus des circuits de détection du signal de bruit, correspondant à des intégrateurs à grande constante de temps, respectivement IE et IR. On peut ainsi obtenir à l'entrée d'un circuit logique CL des informations de valeur de crête du signal sur la voie émission (SE), de valeur moyenne du bruit sur la voie émission (SBE), de valeur de crête du signal sur la voie réception (SR) et de valeur moyenne du bruit sur la voie réception (SBR). A partir de ces signaux, le circuit logique CL fournit un premier signal logique B/P indiquant si l'on a du bruit sur les deux voies ou de la parole sur l'une des voies et un deuxième signal logique E/R indiquant, dans le cas où l'on a un signal de parole, si ce signal de parole est apparu en premier sur la voie émission ou sur la voie réception. Ces signaux logiques sont fournis à un circuit de commande CC qui, en présence d'un signal logique de parole sur la sortie B/P, met à faible gain celui des atténuateurs d'émission et de réception (ATE ou ATR) correspondant à la voie sur laquelle on a détecté un signal de parole.

Ce dispositif de l'art antérieur fournit des résultats satisfaisants en ce qui concerne la sélection de la voie active et l'élimination des signaux de bruit mais présente encore des inconvénients lors du basculement d'une voie à l'autre. En effet, dans ce dispositif, comme dans tous les dispositifs connus de l'art antérieur, les atténuateurs fonctionnent dans l'un ou l'autre de deux états : un état prédéterminé d'atténuation faible ou nulle quand l'atténuateur est dans la voie active et un état prédéterminé d'atténuation maximale quand l'atténuateur est dans la voie inactive, la transition entre ces deux états étant assurée avec une certaine constante de temps. En outre, certains dispositifs, comme celui de la demande de brevet susmentionnée, prévoient une position intermédiaire d'atténuation égale à la moitié de l'atténuation maximale quand aucune des deux voies n'est active, c'est-à-dire que seul du bruit est présent sur les voies

2

émission et réception.

L'atténuation maximale de chacun des atténuateurs étant constante, elle doit être choisie pour être suffisante dans le pire des cas (c'est-à-dire le cas où les compresseurs ont leur gain maximal) et doit donc être très élevée. Il en résulte que, lors du basculement des voies émission et réception, la transition est longue si les constantes de temps de commutation sont choisies trop élevées ou bien entraîne un effet parasite désagréable au confort de l'écoute.

Ainsi, un objet de la présente invention est de pallier cet inconvénient et de réduire cet effet néfaste au basculement sans augmenter la constante de temps de basculement du système.

Un autre objet de la présente invention est d'améliorer encore le circuit logique fournissant les signaux de commande de sélection des atténuateurs.

Pour atteindre ces objets ainsi que d'autres, la présente invention prévoit un dispositif de commande d'un appareil téléphonique "mains libres", cet appareil comprenant, couplées à une interface de liaison avec une ligne téléphonique :

. une voie émission comportant un microphone, un compresseur de signal ramenant le signal de microphone à un niveau moyen constant, et un atténuateur, et

. une voie réception comportant un compresseur de signal ramenant le signal de ligne à un niveau moyen constant, un atténuateur et un haut-parleur,

l'ensemble des voies émission et réception définissant, en raison du couplage acoustique entre microphone et haut-parleur et du couplage électrique dans l'interface de liaison, une boucle d'amplification.

Le dispositif de commande comprend des moyens pour régler initialement le gain de ladite boucle à une valeur déterminée peu inférieure à 1 (0 dB), et des moyens pour détecter les variations de gain des compresseurs d'émission et de réception, et des moyens pour faire varier automatiquement de façon correspondante l'atténuation de l'un au moins des atténuateurs de manière à maintenir constante de façon automatique, en fonctionnement, la somme des gains des compresseurs et des atténuateurs.

Ainsi, selon l'invention, l'atténuation de l'atténuateur de la voie inactive est toujours maintenue à une valeur suffisamment élevée pour que la boucle d'amplification des voies émission et réception n'oscille pas mais est autoadaptée pour rester près de cette condition de non-oscillation de sorte que, lors d'un basculement, la variation de gain de l'atténuateur doit être plus faible que dans l'art antérieur.

Ces objets, caractéristiques et avantages ainsi que d'autres de la présente invention seront exposés plus en détail dans la description suivante de modes de réalisation particuliers faite en relation avec les figures jointes parmi lesquelles :

la figure 1 illustre schématiquement des composants essentiels d'un appareil téléphonique "mains libres" selon l'art antérieur ;

la figure 2 représente très schématiquement la boucle d'amplification d'un appareil "mains libres" pour mettre en lumière le procédé mis en oeuvre par la présente invention ;

la figure 3 représente un exemple de circuit de réglage de gain d'un atténuateur ;

la figure 4 représente sous forme de blocs un circuit logique de reconnaissance bruit/parole à hystérésis adaptative d'un appareil selon la présente invention ; et

la figure 5 représente un exemple de réalisation d'une partie des circuits de la figure 4.

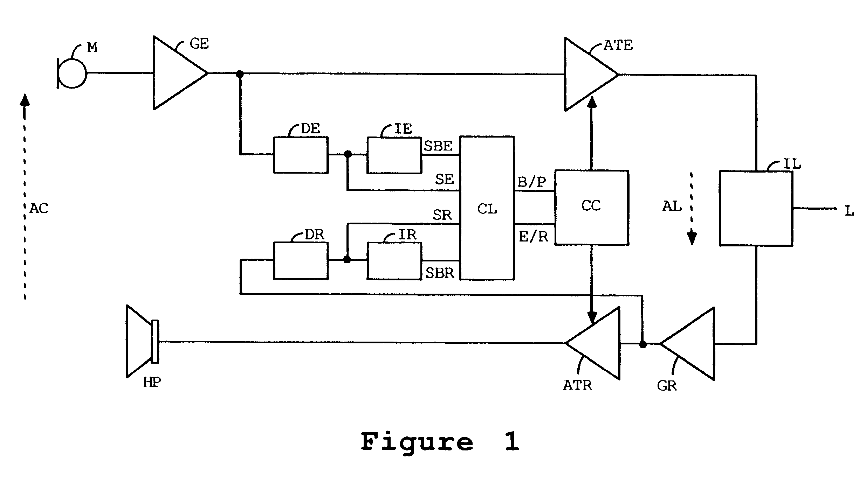

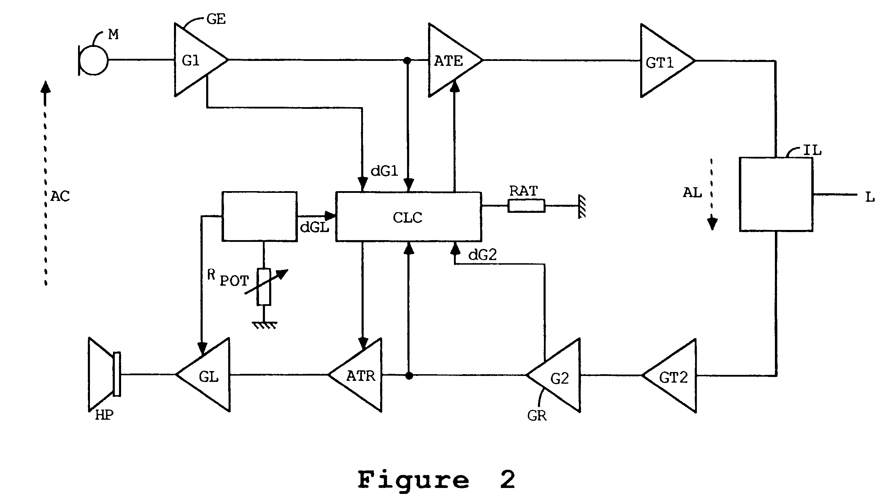

La figure 2 représente le schéma d'ensemble d'un appareil "mains libres" d'une façon légèrement différente de celle de la figure 1.

Dans la voie émission, on retrouve un microphone M, un compresseur GE et un atténuateur ATE. On a en outre représenté sous la forme d'un amplificateur GT1 l'ensemble des éléments présentant un gain compris entre l'atténuateur ATE et la ligne L. De même, la voie réception comprend un compresseur GR, un atténuateur ATR et un haut-parleur HP. On a en outre représenté un amplificateur de haut-parleur GL couramment utilisé dans de tels dispositifs pour permettre à l'utilisateur de régler l'intensité sonore du haut-parleur. Egalement, l'ensemble des gains entre la ligne L et le compresseur GR est figuré sous forme d'un amplificateur GT2.

Le couplage électrique entre les voies émission et réception dans l'interface ligne IL et la ligne L est caractérisé par une atténuation AL. De même le couplage acoustique entre le haut-parleur et le microphone est caractérisé par une atténuation AC. On considère que les gains et atténuations GT1, GT2, AL et AC sont des constantes. Par contre, comme l'a vu précédemment, les compresseurs GE et GR qui ont pour fonction d'asservir l'amplitude de leur tension de sortie à une valeur de crête prédéterminée ont des gains variables. A tout instant, le gain de ces compresseurs peut s'écrire :

$G1 = G1min + dG1$ pour le compresseur d'émission GE, et

$G2 = G2min + dG2$ pour le compresseur de réception GR.

dG1 et dG2 sont les variations de gain des deux compresseurs asservissant l'amplitude des signaux de sortie à une valeur fixe. Enfin, le gain de l'amplificateur de haut-parleur GL peut s'écrire GL = GLmax - dGL, GLmax correspondant au gain dans le cas où le haut-parleur est réglé à l'intensité sonore la plus élevée.

Ainsi, dans le cas où les gains G1 et G2 sont à leurs valeurs minimales et où le haut-parleur HP est réglé à son intensité maximale, le gain de la boucle d'amplification sera :

$$G1min + G2min + GLmax + ATR + ATE + GT1 + GT2 + AL + AC \qquad (1)$$

L'ensemble de ces gains (positifs en dB) et atténuations (négatives en dB) doit fournir une amplification de boucle inférieure à 1, c'est-à-dire à 0 dB. Selon l'invention, on choisit de maintenir en permanence cette somme à une valeur constante, par exemple -1 dB, en faisant varier la somme ATR + ATE en relation avec les variations dG1, dG2 et -dGL. Plus particulièrement, si l'on appelle A0 la valeur de la somme ATR + ATE résultant de l'équation (1) ci-dessus, on impose une réaction sur ATR et ATE pour que l'on ait dans chaque cas :

$$ATR + ATE = A0 + dG1 + dG2 - dGL \qquad (2)$$

Dans ces conditions, le circuit optimise à tout instant le fonctionnement à l'alternat en maintenant le gain de boucle aussi proche que possible de 0 dB tout en évitant les conditions d'instabilité. Le circuit s'adapte donc automatiquement et de lui-même aux conditions de fonctionnement.

Pour atteindre ce résultat, il est prévu selon l'invention de détecter les variations de gain dG1 et dG2 des compresseurs GE et GR et la variation de gain dGL de l'amplificateur de haut-parleur et d'appliquer, par un circuit logique et de commande désigné par CLC en figure 2 et dont des modes de réalisation seront détaillés ci-après, la variation de gain

$$dA = -(dG1 + dG2 - dGL)$$

aux atténuateurs. En pratique, dans une configuration où l'une des voies émission ou réception est active, l'atténuateur correspondant aura un gain unité et l'autre atténuateur présentera l'atténuation A0 + dA. Dans une configuration où les deux voies sont inactives, les deux atténuateurs seront réglés au même gain intermédiaire égal à (A0 + dA)/2.

Des modes de réalisation des divers éléments de l'appareil "mains libres" ont déjà été décrits dans FR-A-2 618 626 susmentionnée. En outre, un mode de réalisation particulier des compresseurs a été décrit dans FR-A-2 618 622.

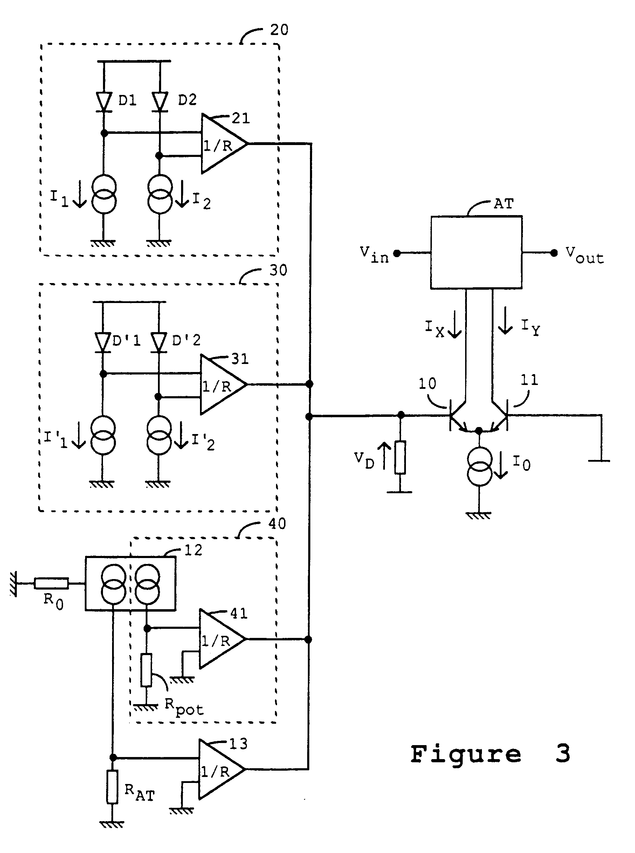

La figure 3 illustre un mode de réalisation du réglage automatique du gain d'un atténuateur AT (ATE ou ATR). Cet atténuateur est constitué d'un multiplieur deux quadrants tel que décrit par B. Gilbert dans l'article IEEE Solid State Circuits Volume SC 3, page 365-373, décembre 1968. Un tel circuit, représenté par le bloc AT, a un gain qui dépend de courants Ix et Iy qui en sont extraits. Ainsi, si l'on appelle Vin la tension d'entrée de cet atténuateur, sa tension de sortie Vout sera :

$$Vout = Vin(Ix/Iy),$$

c'est-à-dire que le gain est égal Ix/Iy. Ces courants Ix et Iy sont fixés par un amplificateur différentiel constitué par exemple de deux transistors NPN 10 et 11 dont les collecteurs sont reliés au bloc AT et dont les émetteurs sont reliés ensemble à une source de courant I0. La base du transistor 10 est reliée à une tension de référence par une résistance R et la base du transistor 11 est reliée directement à la même tension de référence. Ainsi, si on appelle $V_D$ la tension aux bornes de la résistance R, on a :

$$Ix = I0/(1+e^{V_D/V_T})$$
$$Iy = (I0e^{V_D/V_T})/(1 + e^{V_D/V_T})$$
$$\text{et} \quad Ix/Iy = e^{-V_D/V_T}$$

où $V_T = kT/q$ (k: constante de Boltzmann, T : température en kelvins, q : charge de l'électron - à la température ambiante $V_T$ est de l'ordre de 26 mV).

Le réglage de base de l'atténuateur AT conforme à l'équation (1), en supposant que l'autre atténuateur a un gain nul, est fixé par des résistances RO et $R_{AT}$ représentées dans la partie inférieure gauche de la figure 3. La résistance RO fixe le courant d'une source de courant 12 à une valeur $V_T/RO$. Ce courant est injecté dans une résistance $R_{AT}$. La tension aux bornes de la résistance $R_{AT}$ est convertie par un convertisseur tension-courant 13 de rapport 1/R et par la résistance R sur la base du transistor NPN 10 (la valeur de R étant la même dans les deux cas) en une tension $V_D = (R_{AT}/RO)V_T$. On notera que les résistances RO et $R_{AT}$ sont des résistances externes au circuit intégré pour permettre un réglage initial conforme à l'équation (1).

Les autres éléments représentés à la gauche de la figure 3 permettent de modifier l'atténuation en fonction de dG1, dG2 et du réglage de l'amplificateur de haut-parleur.

Le bloc 20 correspond à la correction liée à dG1, le bloc 30 correspond à la correction liée à dG2 et le bloc 40 à la correction liée à la variation du gain de l'amplificateur GL de haut-parleur.

Comme cela est classique dans le domaine de la réalisation d'amplificateurs et de compresseurs en circuit intégré et comme on peut le voir plus particulièrement dans FR-A-2 618 622, le gain des compresseurs correspond à des courants circulant dans diverses sources de courant polarisant chaque compresseur. Pour avoir une indication de ces gains ou de ces variations de gain, il suffira donc de recopier les courants circulant dans ces sources de courant par des miroirs de courant classiques. Par exemple, si le gain G1 du compresseur GE dépend du rapport de deux courants I1 et I2 selon la formule :

$$G1 = (I1/I2)G1min,$$

on pourra utiliser un montage tel que celui du bloc 20 de la figure 3, dans lequel les courants I1 et I2 circulent dans des sources de courant correspondant à des miroirs de courant, chacune de ces sources de courant étant en série avec une diode, respectivement D1 et D2. La chute de courant dans la diode D1 parcourue par le courant I1 sera :

$$V_{D1} = V_T log(I1/Is)$$

où $V_T = kT/q$ (k : constante de Boltzmann, T : température en kelvins, q : charge de l'électron) et Is est le courant de saturation de la diode. De même la chute de tension $V_{D2}$ aux bornes de la diode D2 sera :

$$V_{D2} = V_T log(I_2/I_S)$$

La tension différentielle v1 $= V_{D1} - V_{D2}$ sera donc :

$$v1 = V_T log(I1/I2).$$

Cette différence de tension est convertie par un convertisseur tension-courant 21 en un courant $(V_T/R)$-log(I1/I2) appliqué à la résistance R d'entrée du transistor 10 pour contribuer à la tension $V_D$ et donc à la variation de gain de l'atténuateur AT.

De même, le bloc 30 permet, en fonction des courants I'1 et I'2 caractéristiques du gain dans le compresseur d'emission, de fournir à la sortie d'un convertisseur tension-courant 31 une indication de la variation de gain de ce compresseur.

Enfin, le bloc 40 permet de fournir un signal indicatif de la variation de gain de l'amplificateur de microphone. Le gain de cet amplificateur dépend d'une résistance extérieure $R_{POT}$. Un courant $V_T/RO$ est injecté dans cette résistance $R_{POT}$ à partir de la source de courant 12 et l'on obtient donc à la sortie d'un convertisseur tension-courant 41 de valeur -1/R un courant $(V_T/R)(-R_{POT}/RO)$.

En définitive, quand tous les blocs 20, 30 et 40 sont actifs, la tension $V_D$ sur la résistance R à l'entrée du transistor 10 s'exprime par :

$$V_D = V_T[log(I1/I2) + log(I'1/I'2) + R_{AT}/RO - R_{POT}/RO]$$

Etant donné que $Ix/Iy = e^{-V_D/V_T}$ comme on l'a indiqué précédemment, on a $Ix/Iy = (I2/I1) \times (I'2/I'1) \times e^{-R_{AT}/RO} \times e^{+R_{POT}/RO}$. Il en résulte que l'on obtient le but recherché à savoir que l'atténuation de l'atténuateur AT variera avec les variations de gain des compresseurs émission et réception et avec le réglage du potentiomètre de haut-parleur.

5

En reprenant les schémas d'un circuit de l'art antérieur tel que décrit en relation avec la figure 1, la présente invention vise également un perfectionnement au circuit logique CL permettant de traiter les informations de signal + bruit (SE, SR) et de bruit (SBE, SBR) des voies émission et réception pour fournir le signal E/R de détermination de la voie active (le circuit de fourniture du signal B/P reste conforme à ce qui a été décrit dans FR-A-2 618 626 susmentionnée).

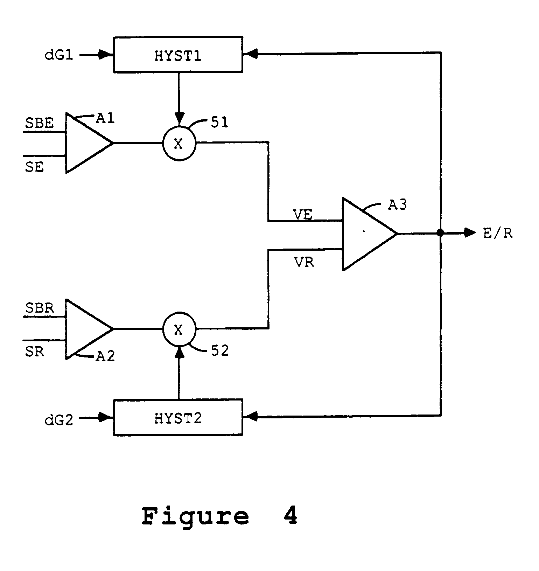

La figure 4 représente le schéma général d'un circuit de reconnaissance de voie active (émission ou réception) selon l'invention. Ce circuit reçoit comme entrée les signaux SE, SBE, SR, SBR décrits en relation avec la figure 1. Les signaux SE et SBE sont envoyés sur un premier soustracteur A1 et les signaux SR et SBR sur un deuxième soustracteur A2 de façon à obtenir à la sortie de chacun de ces soustracteurs les signaux $V_E$ = SE-SBE (signal d'émission exempt de bruit) et $V_R$ = SR-SBR (signal de réception exempt de bruit). Ces signaux sont classiquement envoyés à un comparateur A3 qui fournit en sortie un signal logique E/R indiquant si la voie active est la voie émission ou la voie réception.

Selon la présente invention, il est prévu d'apporter à l'entrée active émission ou réception de l'amplificateur A3 une hystérésis adaptative. Le but de cette hystérésis est d'éviter des basculements intempestifs du comparateur entrainant des phénomènes de hachage du signal de parole.

Pour cela, le signal de sortie $V_E$ du soustracteur A1 est multiplié dans un multiplieur 51 par un coefficient d'hystérésis HYST1 qui dépend de la variation de gain dG1 du compresseur d'émission GE. De même, la sortie de l'amplificateur A2 est multipliée dans un multiplieur 52 par un coefficient d'hystérésis HYST2 qui dépend de la variation de gain dG2 du compresseur de réception GR. Les blocs HYST1 et HYST2 sont validés par la sortie E/R de l'amplificateur A3 de sorte que l'hystérésis est appliquée à celle des voies qui est déterminée comme inactive.

En effet, si, à l'état initial, alors qu'aucune des hystérésis n'est appliquée, on détecte un signal en voie émission, il peut arriver dans certains cas, si le couplage de la ligne téléphonique AL est de très mauvaise qualité, que l'on produise des signaux en sortie du compresseur GR dont l'amplitude est supérieure aux signaux du compresseur GE (les signaux de GR sont alors en dehors de la zone de compression). L'hystérésis vise à tenir compte de ce facteur et à ramener une information correcte pour que, tant que la voie émission est active, $V_E$ reste supérieur à $V_R$ et que le signal E/R ne bascule pas.

Ainsi, en supposant pour simplifier que le bruit est nul (SBR = SBE = 0), la tension $V_R$ résultant du couplage AL est :

$$V_R = V_E \times ATE \times AL \times GT1 \times GT2 \times G2 \times HYST2$$

On choisit HYST2 pour que $V_R$ soit inférieur à $V_E$, ce qui fait que le comparateur A3 délivre toujours l'information émission (E) tant que le signal $V_E$ n'a pas disparu (fin de parole).

Pour le réglage initial de ce circuit, dans le cas où l'on est en émission, on se place dans le cas où G2 = G2min et on calcule l'hystérésis $HYST2_0$ à introduire pour avoir $V_R$ inférieur à $V_E$. On règle le circuit pour ce cas et, ensuite, comme on le verra ci-après, on prévoit une adaptation automatique de la valeur de l'hystérésis pour que si le gain du compresseur GR devient G2min + dG2 on conserve $V_R < V_E$. Ce qui précède s'applique de façon symétrique dans le cas où l'on est en réception.

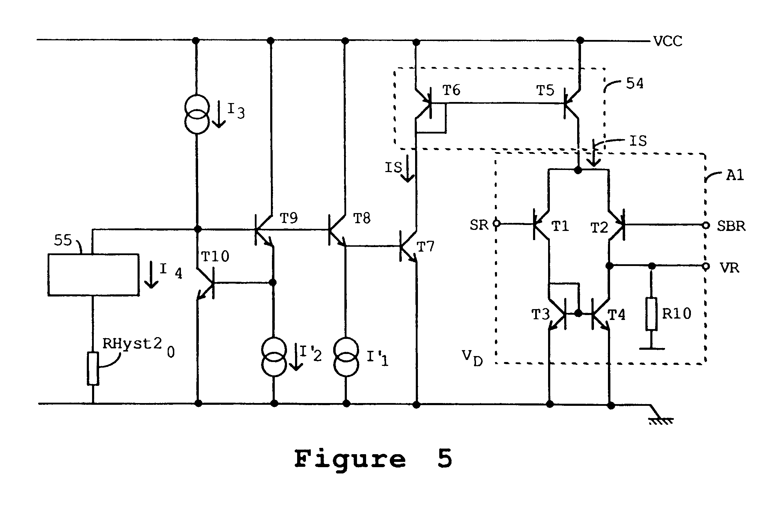

Un exemple de circuit permettant d'obtenir ce résultat est illustré en figure 5 dans le cas de la voie réception.

On peut voir en figure 5 le comparateur A1 recevant les signaux SR et SBR et fournissant une tension $V_R$ pour l'amplificateur A3 (non représenté). Ce comparateur comprend de façon classique un montage différentiel constitué de deux transistors PNP T1 et T2 chargés par une charge active constituée de deux transistors T3 et T4 de type NPN à base commune. Le collecteur du transistor T3 est connecté au collecteur du transistor T1, le collecteur du transistor T4 étant connecté au collecteur du transistor T2 et les émetteurs des transistors T3, T4 étant connectés à la masse. En outre, la base des transistors T3 et T4 est reliée au collecteur du transistor T3. La tension de sortie est recueillie aux bornes d'une résistance R10 reliée entre les collecteurs des transistors T2 et T4 et une tension de référence. Il s'agit là d'un montage classique de comparateur dans lequel les émetteurs des transistors T1 et T2 doivent être alimentés par un courant $I_S$.

Selon l'invention, le courant $I_S$ est réglé pour tenir compte d'une valeur d'hystérésis au repos et pour varier si le gain du compresseur GR varie. Ainsi, le courant $I_S$ est obtenu par un miroir de courant 54 dans lequel un transistor PNP T5 recopie le courant dans un transistor PNP T6. Le courant dans ce transistor T6 dépend de la polarisation d'un transistor NPN T7. Les transistors T6 et T7 sont montés en série entre la tension d'alimentation $V_{CC}$ et la masse.

Le circuit de polarisation du transistor T7 comprend deux transistors T8 et T9 connectés entre la tension $V_{CC}$ et la masse par l'intermédiaire de sources de courant I'1 et I'2, les courants I'1 et I'2 étant tels

6

qu'indiqués précédemment, à savoir que G2 = G2min(I'1/I'2). Les bases des transistors T8 et T9 sont interconnectées. Le point de connexion de ces bases est relié à la tension haute VCC par l'intermédiaire d'une source de courant I3 et à la masse par l'intermédiaire d'un transistor T10 dont la base est relié à l'émetteur du transistor T9. La base commune des transistors T8 et T9 est en outre reliée à la masse par l'intermédiaire d'une source de courant 55 fournissant un courant

$$I4 = V_T/R_{HYST2_0}$$

en relation avec une résistance

$$R_{HYST2_0},$$

externe au circuit intégré et choisie pour le réglage initial mentionné précédemment.

Pour calculer la valeur de $I_S$ dans le circuit de la figure 5, on peut écrire que les tensions de base des transistors T8 et T9 sont identiques (ces bases sont interconnectées). La tension de base du transistor T9 est égale à la tension base-émetteur de ce transistor plus la tension base-émetteur du transistor T10 et la tension de base du transistor T8 est égale à la tension base-émetteur de ce transistor plus la tension base-émetteur du transistor T7, c'est-à-dire :

VBE(T9) + VBE(T10) = VBE(T8) + VBE(T7).

Le courant dans le transistor T10 est sensiblement égal à I3 - I4, le courant dans le transistor T9 est égal à I'2, le courant dans le transistor T8 est égal à I'1 et le courant dans le transistor T7 est le courant $I_S$ que l'on cherche à obtenir.

Ainsi, en utilisant la relation selon laquelle la tension base-émetteur d'un transistor NPN est proportionnelle au logarithme du courant qui le traverse, on obtient :

$I_S$ = (I'2/I'1) (I3 - I4).

Le courant I3 a une valeur prédéterminée et le courant I4 dépend de la valeur de la résistance

$$R_{HYST2_0}.$$

Ainsi, quand le gain du compresseur GR est à sa valeur minimale $GR_{min}$, on a I'1 = I'2 et le courant $I_S$ dépend seulement de la valeur

$$R_{HYST2_0}.$$

Ensuite, quand le gain G2 varie, le courant $I_S$ varie inversement proportionnellement à ce gain puisque l'on avait :

G2 = G2min(I'1/I'2).

On a ainsi réalisé avec le montage illustré en figure 5 un soustracteur multiplieur qui permet d'effectuer une soustraction d'élimination de bruit suivie d'une multiplication par l'inverse du gain du compresseur de la voie considérée, cette multiplication étant effectuée pour que la voie inactive ne soit pas traitée de façon erronée par suite d'un signal provenant d'un couplage avec la voie active.

Ainsi, le circuit adapte à tout instant le paramètre de l'hystérésis aux conditions de fonctionnement de façon à optimiser le résultat du comparateur A3. On a le même fonctionnement pour l'hystérésis HYST1 à appliquer à l'autre entrée du comparateur A3 quand c'est la voie réception qui est active.

## Revendications

1. Dispositif de commande d'un appareil téléphonique "mains libres", cet appareil comprenant, couplées à une interface de liaison (IL) avec une ligne téléphonique (L) :

   . une voie émission comportant un microphone (M), un compresseur de signal (GE) ramenant le signal de microphone à un niveau moyen constant, et un atténuateur (ATE), et

   . une voie réception comportant un compresseur de signal (GR) ramenant le signal de ligne à un niveau moyen constant, un atténuateur (ATR) et un haut-parleur (HP),

   l'ensemble des voies émission et réception définissant, en raison du couplage accoustique (AC) entre microphone et haut-parleur et du couplage électrique (AL) dans l'interface de liaison, une boucle d'amplification,

   caractérisé en ce qu'il comprend :

   des moyens pour régler initialement le gain de ladite boucle à une valeur déterminée peu inférieure à 1 (0 dB),

   des moyens pour détecter les variations de gain des compresseurs d'émission et de réception (GE, GR) et des moyens pour faire varier automatiquement de façon correspondante l'atténuation de l'un au moins des atténuateurs (ATE, ATR) de maniére à maintenir constante, en fonctionnement, la somme des gains des compresseurs et des atténuateurs.

2. Dispositif selon la revendication 1, caractérisé en ce que le haut-parleur (HP) est associé à un amplificateur à gain variable (GL) et en ce qu'il est prévu des moyens pour maintenir constante, en fonctionnement, la somme des gains des compresseurs, des atténuateurs et de l'amplificateur de haut-parleur.

3. Dispositif de commande d'un appareil téléphonique "mains libres" selon la revendication 1, comprenant des moyens de sélection de voie active (voie émission ou voie réception), ces moyens comparant la sortie du compresseur d'émission (GE) à celle du compresseur de réception (GR), caractérisé en ce qu'il comprend des moyens pour, une fois la sélection effectuée, multiplier l'entrée de comparaison correspondant à la voie inactive par un coefficient d'hystérésis inversement proportionnel au gain du compresseur de cette voie inactive.

4. Dispositif de commande d'un appareil téléphonique "mains libres" selon la revendication 3, caractérisé en ce que les moyens de multiplication comprennent un amplificateur différentiel réalisant, pour la voie inactive, une soustraction entre le signal additionné de bruit (SR) et le bruit de cette voie (SBR), ce comparateur étant alimenté par un courant variant proportionnellement à une résistance extérieure

$$(R_{HYST_0})$$

et à l'inverse du gain du compresseur de cette voie.

5. Dispositif de commande d'un appareil téléphonique "mains libres" selon la revendication 4, caractérisé en ce que ledit courant est fourni par un circuit comprenant, entre une tension d'alimentation et la masse :

   - un premier transistor NPN (T7),
   - un deuxième transistor NPN (T8) en série avec une première source de courant (I'1),
   - un troisième transistor NPN (T9) en série avec une deuxième source de courant (I'2),
   - un quatrième transistor NPN (T10) en série avec une troisième source de courant (I3),

   la base du premier transistor étant reliée à l'émetteur du deuxième ; les bases des premier et deuxième transistors étant interconnectées et reliées au collecteur du quatrième dont la base est reliée à l'émetteur du troisième ; une quatrième source de courant (I4) proportionnelle à la valeur d'une résistance

$$(R_{HYST2_0})$$

   étant connectée aux bornes du quatrième transistor (T10) pour fournir un courant inversement proportionnel à la valeur de cette résistance ; les courants des deuxième et troisième sources de courant étant tels que leur rapport est proportionnel au gain du compresseur de la voie considérée.

**Claims**

1. A control device for a hand-free telephone set, this apparatus comprising, coupled to an interface (IL) with a telephone line (L):

   an emission channel comprising a microphone (M), a signal compressor (GE) setting the microphone signal to a constant average level, and an attenuator (ATE), and

   a reception channel comprising a signal compressor (GR) setting the line signal to a constant average level, an attenuator (ATR) and a loudspeaker (HP),

   the assembly of the emission and reception channels forming an amplifying loop, due to the acoustic coupling (AC) between the microphone and the loudspeaker and to the electric coupling (AL) in the line interface,

   characterized in that it comprises:

   means for initially setting the gain of said loop to a determined value slightly lower than 1 (0 dB),

   means for detecting the gain variations of the emission and reception compressors (GE, GR) and means for correspondingly and automatically modifying the attenuation of at least one of the attenuators (ATE, ATR) so as to maintain constant, in operation, the sum of the compressor and attenuator gains.

2. A device according to claim 1, characterized in that the loud-speaker (HP) is associated with a gain-controlled amplifier (GL) and wherein means are provided for maintaining constant, in operation, the sum of the gains of the compressors, attenuators and loudspeaker amplifier.

3. A control device for a hand-free telephone set according to claim 1 comprising means for selecting the active channel (emission or reception channel), those means comparing the output of the emission compressor (GE) with the output of the reception compressor (GR), characterized in that it comprises means for, once selection has been carried out, multiplying the comparison input corresponding to the inactive channel by a hysteresis coefficient reciprocally proportional to the compressor gain of this inactive channel.

4. A control device for a hand-free telephone set according to claim 3, characterized in that the multiplying means comprise a differential amplifier performing, for the inactive channel, a subtraction between the signal affected with noise (SR) and the noise of this channel (SBR), said comparator being fed by a current proportionally varying as a function of an external resistor ($R_{HYST0}$) and reciprocally with respect to the compressor gain of this channel.

5. A control device for a hand-free telephone set according to claim 4, characterized in that said current is supplied by a circuit comprising, between a supply voltage and ground:

   - a first NPN transistor (T7),
   - a second NPN transistor (T8) in series with a first current source (I'1),
   - a third NPN transistor (T9) in series with a second current source (I'2),
   - a fourth NPN transistor (T10) in series with a third current source (13),

   the base of the first transistor being connected to the emitter of the second one; the bases of the first and second transistors being interconnected and connected to the collector of the fourth transistor, the base of which is connected to the emitter of the third one; a fourth current source (14) proportional to the value of a resistor

   $$(R_{HYST2_0})$$

   being connected to the terminals of the fourth transistor (T10) for supplying a reciprocally proportional current varying as a function of the value of said resistor; the currents of said second and third current sources being such that their ratio is proportional to the compressor gain of the considered channel.

**Patentansprüche**

1. Steuereinrichtung für ein "Freihand"-Telefongerät, das folgende, mit einer Schnittstelle (IL) mit einer Telefonleitung (L) verbundene Merkmale aufweist:
   - einen Sendekanal mit einem Mikrophon (M), wobei ein Signalverdichter (GE) das Mikrophonsignal auf einen konstanten mittleren Pegel einstellt, und mit einem Dämpfungsglied (ATE), und
   - einen Empfangskanal mit einem Signalverdichter (GR), der das Leitungssignal auf einen konstanten mittleren Pegel einstellt, einem Dämpfungsglied (ATR) und einem Lautsprecher (HP),
   - eine Anordnung aus den Sende- und Empfangskanälen, die aufgrund der akustischen Kopplung (AC) zwischen dem Mikrophon und dem Lautsprecher und der elektrischen Kopplung (AL) in der Schnittstelle eine Verstärkungsschleife bilden,
   **gekennzeichnet** durch
   - eine Vorrichtung zum anfänglichen Einstellen der Verstärkung dieser Schleife auf einen Wert, der geringfügig unter 1 (0 dB) liegt,
   - eine Vorrichtung zum Erfassen der Veränderungen der Verstärkung des Sende- und des Empfangsverdichters (GE, GR) und eine Vorrichtung zum automatischen entsprechenden Verändern der Dämpfung mindestens eines der Dämpfungsglieder (ATE, ATR), so daß im Betrieb die Summe der Verstärkungen der Verdichter und der Dämpfungsglieder konstant ist.

2. Einrichtung nach Anspruch 1, dadurch gekennzeichnet, daß der Lautsprecher (HP) mit einem Verstärker mit variabler Verstärkung (GL) verbunden ist und daß eine Vorrichtung vorgesehen ist, die in Betrieb die Summe der Verstärkungen der Verdichter, der Dämpfungsglieder und des Lautsprecherverstärkers konstant hält.

3. Steuereinrichtung für ein "Freihand"-Telefongerät nach Anspruch 1, mit einer Vorrichtung zum Auswählen des aktiven Kanales (Sendekanales oder Empfangskanales), wobei diese Vorrichtung den Ausgang des Sendeverdichters (GE) mit dem Ausgang des Empfangsverdichters (GR) vergleicht, gekennzeichnet durch eine Vorrichtung zum Multiplizieren des Vergleichseingangs, der dem inaktiven Kanal entspricht, mit einem Hysteresekoeffizienten, der umgekehrt proportional zur Verstärkung des Verdichters dieses inaktiven Kanales ist, wenn die Auswahl einmal getroffen wurde.

4. Steuereinrichtung für ein "Freihand"-Telefongerät nach Anspruch 3, dadurch gekennzeichnet, daß die Multipliziervorrichtung einen Differentialverstärker aufweist, der für den inaktiven Kanal eine Subtraktion zwischen dem mit Rauschen behafteten Signal (SR) und dem Rauschen dieses Kanales (SBR) durchführt, wobei in den Vergleicher ein Strom eingespeist wird, der sich proportional zu einem externen Widerstand ($R_{HYST0}$) und zum Inversen der Verstärkung des Verdichters dieses Kanales verändert.

5. Steuervorrichtung für ein "Freihand"-Telefongerät nach Anspruch 4, dadurch gekennzeichnet, daß der Strom von einer Schaltung eingespeist wird, die zwischen einer Versorgungsspannung und Masse folgende Merkmale aufweist:
   - einen ersten NPN-Transistor (T7),
   - einen zweiten NPN-Transistor (T8), der mit einer ersten Stromquelle (I'1) in Reihe geschaltet ist,
   - einen dritten NPN-Transistor (T9), der mit einer zweiten Stromquelle (I'2) in Reihe geschaltet ist,
   - einen vierten NPN-Transistor (T10), der mit einer dritten Stromquelle (I3) in Reihe geschaltet ist,
   wobei die Basis des ersten Transistors mit dem Emitter des zweiten Transistors verbunden ist, die Basen des ersten und des zweiten Transistors miteinander verbunden sind und mit dem Kollektor des vierten Transistors verbunden sind, dessen Basis mit dem Emitter des dritten Transistors verbunden ist, eine vierte Stromquelle (I4), die proportional zum Wert des Widerstandes ($R_{HYST20}$) ist, mit den Anschlüssen des vierten Transistors (T10) verbunden ist, um eine zum Wert dieses Widerstandes umgekehrt proportionalen Strom zu liefern, und wobei die Ströme der zweiten und dritten Stromquelle so sind, daß ihr Verhältnis proportional zur Verstärkung des Verdichters in dem betrachteten Kanal ist.

Figure 1

Figure 2

EP 0 376 866 B1

Figure 3

Figure 4

Figure 5

EP 0 376 866 B1